(19)

Europäisches
Patentamt

European
Patent Office

Office européen
des brevets

(11)  **EP 3 191 905 B1**

(12)  **EUROPEAN PATENT SPECIFICATION**

(45) Date of publication and mention
of the grant of the patent:
**15.05.2019  Bulletin 2019/20**

(21) Application number: **15766688.4**

(22) Date of filing: **03.09.2015**

(51) Int Cl.:
***G05B 23/02*** *(2006.01)*

(86) International application number:
**PCT/US2015/048285**

(87) International publication number:
**WO 2016/040085 (17.03.2016 Gazette 2016/11)**

(54) **GAS TURBINE FAILURE PREDICTION UTILIZING SUPERVISED LEARNING METHODOLOGIES**

FEHLERVORHERSAGE BEI EINER GASTURBINE MIT UNTER VERWENDUNG VON
METHODOLOGIEN DES ÜBERWACHTEN LERNENS

PRÉDICTION DE DÉFAILLANCE DE TURBINES À GAZ AU MOYEN DE MÉTHODOLOGIES
D'APPRENTISSAGE SUPERVISÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.09.2014  US 201462048577 P**

(43) Date of publication of application:
**19.07.2017  Bulletin 2017/29**

(73) Proprietor: **Siemens Energy, Inc.**
**Orlando, FL 32826 (US)**

(72) Inventors:
• **CAI, Xinmin**
  **14051 Amherst, NY (US)**
• **CHAKRABORTY, Amit**
  **East Windsor, New Jersey 08520 (US)**
• **EVANS, Matthew**
  **Winter Park, Florida 32789 (US)**
• **GOH, Siong Thye**
  **Cambridge, Massachusetts 02139 (US)**

• **YUAN, Chao**
  **Plainsboro, New Jersey 08536 (US)**

(74) Representative: **Patentanwaltskanzlei WILHELM
& BECK**
**Prinzenstraße 13**
**80639 München (DE)**

(56) References cited:
**US-A1- 2003 160 457      US-A1- 2005 267 702
US-A1- 2012 290 879      US-A1- 2012 316 835**

• **SIONG THYE GOH ET AL: "Box drawings for
learning with imbalanced data", KNOWLEDGE
DISCOVERY AND DATA MINING, ACM, 2 PENN
PLAZA, SUITE 701 NEW YORK NY 10121-0701
USA, 24 August 2014 (2014-08-24), pages
333-342, XP058053722, DOI:
10.1145/2623330.2623648 ISBN:
978-1-4503-2956-9**

## Description

### *Technical Field*

The present invention relates to the supervision of gas turbines utilized in power generation networks and a methodology for recognizing pre-fault conditions in a turbine that allow for preventative maintenance operations to be deployed.

### *Background*

Efficient use of fossil fuels is crucial in maintaining a stable power network. A particularly efficient means of transforming this type of fuel into electrical energy is the gas turbine. Gas turbine components operate in a very high temperature environment and under a variety of loading conditions. Deterioration of parts due to thermal fatigue and wear is a real concern. Maintenance is performed to detect and control wear, as well as to repair or replace worn parts as needed to continue to ensure efficient operation.

While various data-driven techniques have been (and continue to be) developed to provide statistical assistance in the scheduling of maintenance events, there is still room for improvement. For example, unexpected forced outages due to gas turbine failures continue to occur. The complete failure of a turbine necessarily results in a shutdown that disrupts the normal operation of electricity generation, and is likely to result in a more costly repair event than a planned maintenance shutdown.

US 2012/316835 A1 **discloses the features of the first parts of the independent claims. A similiar prior art is known from** US 2005/267702 A1.

### *Summary of the Invention*

The needs remaining in the prior art are addressed by the present invention, which relates to the supervision of gas turbines utilized in power generation networks and a methodology for recognizing pre-fault conditions in a turbine that allow for preventative maintenance operations to be deployed and mitigate the possibility of an unexpected forced turbine shutdown.

In accordance with the present invention, a time series set of data for a particular gas turbine (in the form of sensor readings) is reviewed and annotated to include labels that indicate times/events where a potential failure has occurred. A selected number of "pre-event" sensor readings over a period of time (3-5 days, for example) is assembled and compared against known, steady-state normal operation sensor readings to determine if there are any signatures in the pre-event data that would predict the occurrence of a turbine failure (or any other particular "event" being reviewed). That is, are there any perceptible "symptoms" is the sensor readings in the days leading up to a turbine failure (or any other event). A "fast boxes" algorithm (or another suitable type of machine learning methodology) is used to compare the pre-event data to the "normal operation state" data and ascertain if symptoms can be recognized. Going forward, sensor readings that fall within the boundaries developed in the analysis are used as warnings that a failure may be imminent.

In a preferred embodiment of the present invention, only a subset of the total number of gas turbine sensors are included in the analysis, preferably those sensors whose readings are highly sensitive to changes in gas turbine performance. Since the collected readings of both "pre-event" and "normal operations" data forms an imbalanced data set (i.e., the data of interest is a very small collection with respect to the rest of the data), the fast boxes algorithm is well-suited for use in studying the data. The pre-event data (positive data class) is first bounded in a relatively small number of clusters, and then evaluated against the larger amount of normal operation data (negative data class) to ascertain the optimum boundary conditions (in this case "boxes") that delineate the positive data class from the negative data class. Once partitioned into these two categories, a metric is employed to determine if there is a sufficient distinction between the pre-event data and the normal operation data such that the pre-event data may be used as a "symptom" indicator going forward.

While discussed in terms of a gas turbine "failure" event, the methodology of the present invention is applicable to studying another other type of event that causes unwanted interruption in the performance of the gas turbine, or other major machine component.

A specific embodiment of the present invention relates to method for predicting failure events of a gas turbine in a power plant comprising the steps of: obtaining a set of historical time series data associated with a recognized failure event of a gas turbine being studied, the historical data comprising a set of sensor readings collected for a time period prior to the recognized event, defined as a pre-event time period; selecting a subset of sensors to be analyzed and defining a set of pre-event data as the sensor readings from the selected subset of sensors collected during the pre-event time period; comparing the pre-event data to a set of normal operation data; ascertaining a level of discrimination between the pre-event data and the normal operation data, and if the level of discrimination is above a given threshold and identifying the pre-event data as a symptom pattern for use in predicting a future failure of the gas turbine being studied.

In another embodiment of the invention, a non-transitory computer-usable medium has computer readable instructions stored thereon for execution by a processor to perform a method as described above.

Other and further aspects and features of the present invention will be apparent during the course of the following discussion and by reference to the accompanying drawings.

### Brief Description of the Drawings

Referring now to the drawings,

FIG. 1 is a simplified diagram of an exemplary gas turbine power plant, indicating the inclusion of sensors used to measure the performance of the turbine, and also illustrating an exemplary performance predictor component formed in accordance with the present invention;

FIG. 2 is a flowchart of the supervised learning approach for predicting gas turbine failure in accordance with the present invention;

FIG. 3 is a state space diagram illustrating the step of clustering the pre-event data, as performed by the fast boxes algorithm in accordance with the present invention;

FIG. 4 is a state space diagram including the normal operation data with the clustered pre-event data as located in the diagram of FIG. 3;

FIG. 5 is a flowchart illustrating the inclusion of a challenge process to the fast boxes algorithm used in data location learning; and

FIG. 6 contains a pair of plots of the receiver operating characteristic curves (ROC) of evaluation results associated with the challenge process.

### Detailed Description

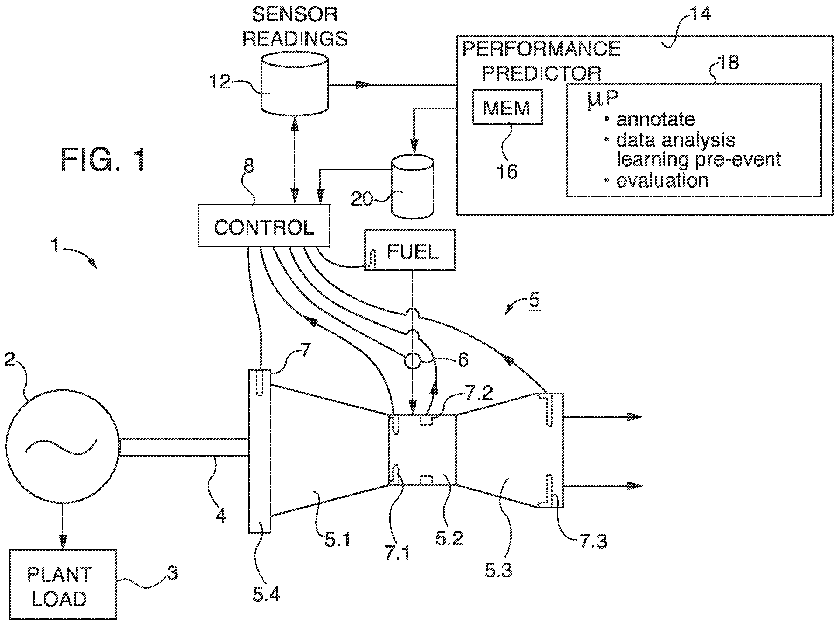

FIG. 1 is a simplified depiction of a typical gas turbine power plant 1 with a generator 2 supplying a plant electric load 3. Generator 2 is driven by a shaft 4 powered by a gas turbine engine 5. Gas turbine engine 5 is itself comprised of a large number of separate components, including a compressor 5.1, a combustion section 5.2, a turbine 5.3, and, perhaps, an set of adjustable inlet vanes 5.4. Fuel is supplied to combustion section 5.2 via a valve 6. In order to maintain acceptable operation of gas turbine power plant 1, a number of sensors 7 are used to monitor the operation of the various components, passing the measured sensor readings to a separate control module 8. Control module 8 may be co-located with gas turbine power plant 1, or may be off-site from the turbine itself. In the diagram of FIG. 1, sensors 7 include a combustor inlet air sensor 7.1, a combustion temperature sensor 7.2, and a blade path temperature sensor 7.3. It is to be understood that there are many more sensors used to monitor the performance of a gas turbine, measuring conditions such as temperature, pressure, rotation, vibration, etc. Indeed, it is possible that close to 200 different sensors may be utilized with a given gas turbine power plant.

Control module 8 receives inputs from sensors 7, and transmits control signals to valves, motors, and actuators as known in the art. The controller may include one or more processors, in one or more locations with associated hardware and software as known in the art.

As mentioned above, one of the challenges remaining in the problem of predicting gas turbine failure is the lack of annotated data. That is, by reviewing the data collected from various sensors and stored within control module 8, one cannot tell if a machine is operating normally or not (even though the machine is up and functioning in some fashion). In other words, a fault may have occurred in the machine's operation, but it may take some time for that fault to present itself as some sort of "failure" in the machine's performance.

In accordance with the present invention, the capabilities of control module 8 are extended to address this problem by including a performance predictor system 10 that may be utilized, as discussed in detail below, to analyze the collected sensor readings and look for any tell-tale changes in sensor readings that may reasonably predict that a certain event (such as a turbine failure) is likely to occur within the next few days. As will be discussed in detail below, performance predictor system 10 includes a database 12 of all historical sensor readings (which may go back a number of years); indeed, this database may form part of a conventional control module 8. Performance predictor system 10 includes a processor component 14 with a memory 16 and processor 18, these elements being used to perform the actual evaluation of the sensor readings data and determine if a future failure event can be predicted by historical, pre-event data. The output from performance component 14, which takes the form of a specific set of "pre-event" data that fulfills this criteria thereafter be used to recognize fault conditions prior to turbine failure, is then stored in a symptom signatures database 20 for on-going use by power plant personnel. The specific architecture of performance predictor system 10 as shown in FIG. 1 is considered to be exemplary only, various other configurations of hardware and software components may be configured to perform the method of the present invention as described in detail below.

The methodology of the present invention begins by studying historical data associated with a specific gas turbine (or other machinery) being studied. The data (in the form of sensor readings) is studied to determine possible times where a "failure" (or some other type of critical event) occurred. The sensor data for a given period of time prior to a recognized event is then annotated to indicate this "pre-event" condition. A separate set of data is annotated as "normal operation" data, where this data is selected from a period of time well beyond the recognized event, where it can safely be presumed that the gas turbine is functioning in a normal manner.

A suitable machine learning algorithm (such as "fast boxes") is then used to learn the location of the pre-event data with respect to the location of the normal operation (post-event) data, creating boundaries around clustered locations of the pre-event data. If any quantifiable boundaries can be used to discriminate the pre-event data from the post-event in an acceptable manner (so as to then identify the pre-event data as a "symptom"), then this pre-event data pattern can be used going forward as an indicator of potential trouble with the machine. Indeed, the process of the present invention as performed by the performance predictor system can be used to monitor the health of the gas turbine's performance and better predict a major event (such as a turbine failure) before it occurs.

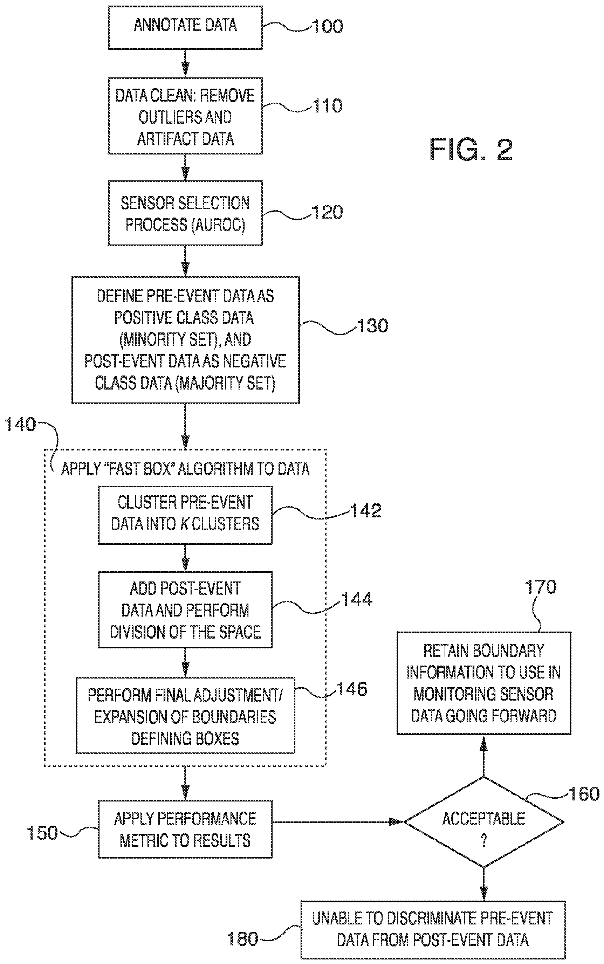

The inventive process begins, as shown in the flowchart of FIG. 2, by first annotating a given set of time series data (sensor readings) associated with a machine under study (step 100). The data is a set of historical data for the specific machine, and may go back in time several years. It is presumed that a forced shutdown (or other event being studied) has occurred in the past and an initial study of the historical data will easily recognize such an event. Based on that knowledge, the data covering a time span of a few days prior to the recognized event is annotated to flag this data as potentially indicating that a problem has occurred. Once annotated, the raw data is cleaned to remove obvious outliers (step 110), as well as any artifacts that would interfere with the type of analysis being performed. Artifacts include data recorded immediately prior to an event. For example, if there is a dramatic decline in the main sensor (MW) reading (heading to 0), this is a clear indicator that the machine is failing, but is not the type of subtle data of the "pre-failure" type that is of interest for the purposes of the present invention. Indeed, it is desired to learn a data pattern before such a dramatic decline in MW power begins in order to improve the machine's performance. These "symptoms" that may show up in data irregularities are more implicit in nature and, therefore, more challenging to discern.

Next, a suitable set of sensors is selected for the analysis process (step 120), where the selected set is a subset of the complete suite of sensors being used to monitor the performance of the machine being studied. As mentioned above, a given turbine may have a set of over 150 different sensors that are used to monitor various aspects of its performance (measuring, for example, generated output power, temperatures at various locations, pressures, vibration, rotation, etc.). Some of these sensors provide data with strong discriminating power, while the data from other sensors is more subtle. To select the best sensors for the purposes of the present invention, it is desirable to choose those sensors whose data most strongly show changes in value between pre-event and post-event data associated with the recognized event under study (e.g., turbine failure).

One tool that may be used in the sensor selection process is the evaluation of the "area under receiver operating characteristic curve" (AUROC) plots of the readings from each of the sensors. AUROC can be defined as the probability that a classifier will assign a higher score to a randomly-chosen positive example than to a randomly-chosen negative example. Said another way, an ROC plot is a graph of the relation between the true-positive rate (sensitivity) and the false-positive rate (1-sensitivty). The "area under" an ROC of 0.50 means that the odds of guessing right are the same as guessing wrong. The closer the guess matches the ROC, the more the area approaches unity (indicative of a perfect matching between the classification and the actual data). For present purposes, the pre-event data is defined as the positive example, and the post-event (normal operating condition) data is defined as the negative example. Thus, a value for AUROC can be calculated for each sensor by comparing its pre-event data to its post-event data, with the higher the value of AUROC (the limit being, obviously, 1.0), the more discriminating the sensor's performance. A set of sensors with an AUROC greater than a predetermined value (e.g., 0.6) may be designated as suitable for the pre-event data learning methodology of the present invention.

The historical, pre-event sensor readings for the selected set of sensors is then assembled (step 130 in the flowchart of FIG. 2) for a period of a few days prior to the recognized event (for example, the data associated with a 3-day time span prior to the event). This first set of data, the pre-event data, is also referred to as the "positive class" data, since it is the data of interest for the predictive purposes of the present invention. A second set of data is also assembled, in this case associated with normal operating conditions and collected for an extended period of time well after the recognized event when the gas turbine was known to be functioning normally. This second set of data (post-event data) is also referred to as the "negative class" data.

As with many other real-world classification problems, the data associated with the positive class (the pre-event data) are far fewer than the remaining data (the post-event class, or "negative class" data). This type of imbalanced data is best analyzed using a method such as the "fast boxes" algorithm described below as opposed to more conventional algorithms that dwell on the larger class of "normal" data.

The fast boxes algorithm (shown as step 140 in FIG. 2) uses the approach of "characterize, then discriminate" in analyzing a given set of data. In accordance with the purposes of the present invention, this approach takes the form of first characterizing the pre-event data, and then studying how this data can be discriminated from the "normal", post-event data (including an initial determination of whether or not such a discrimination is even possible). It follows that if it is possible to discriminate the pre-event data from normal sensor readings, then this pre-event information can be used going forward to aid in the recognition of "symptoms" well before a gas turbine failure (or other major event) occurs.

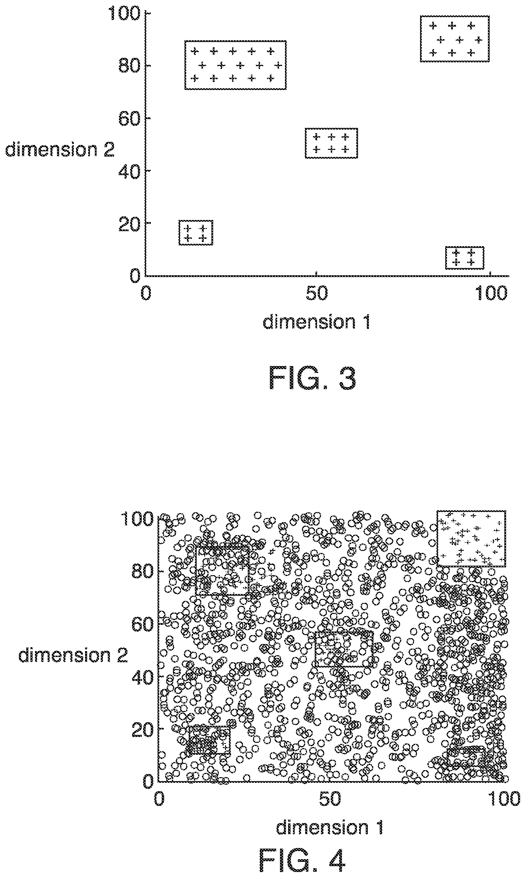

As particularly illustrated in the flowchart of FIG. 2, the first step 142 in the fast boxes approach is to cluster the pre-event data into a given set of K clusters (where $K$ is an adjustable parameter). The decision boundaries for these clusters are initially set as tight boxes of parallel sides around each of the clusters. FIG. 3 illustrates the results of this initially clustering step, illustrating the pre-event data in the form of "crosses" in a plot (i.e., times series data of the selected sensor readings, normalized to fall within a particular range) and the tight rectangular boxes forming the perimeter around each cluster. In this case, five separate clusters of data are created.

Following the creation of the clusters, the post-event (negative class data) is introduced into the analysis, as shown in FIG. 4. The complete space in the diagram is then reviewed (step 144), with negative class data points closest to the above-defined box boundaries identified and given an additional weighting factor c used in the next step of the learning process, since these negative data points have a greater influence on the placement of the boundaries of each of the five cluster boxes. This step is performed in parallel on each of the boxes, thus minimizing the overall computation time.

Once the negative data point weighting is completed, the final step in the fast boxes algorithm (step 146) is performed. This step is known as the "boundary expansion" step, where a one-dimensional classifier is identified for each boundary (both vertical and horizontal) of each box and a set of numerical computations is performed to best define the boundaries, using c as the weight for the specific negative data points and $\beta$ as a regularization parameter that tends to expand the box. The detailed mathematics associated with this boundary expansion process, as well as the fast boxes algorithm in general, may be found in the reference entitled "Boxed Drawings with Learning for Imbalanced Data" by S. Goh et al. and appearing in the Proceedings of the 20th ACM SIGKDD Conference on Knowledge Discovery and Data Mining (KDD), 2014.
A description of the boundary expansion process is also included herein as an Appendix.

The final boundaries defined as the output of the fast boxes algorithm are thus considered as the boundaries between "normal" operating condition data (the post-event, negative class data), and data that may indicate the beginnings of a gas turbine failure (or whatever event is being studied). That is, the fast boxes algorithm has learned the boundaries of the pre-event data. In order to successfully use this information to predict potential failure events going forward, the next step in the process (shown as step 150 in the flowchart of FIG. 2) is to analyze the results of the fast boxes algorithm to determine if there is a sufficient level of discrimination between the pre-event data and the post-event data.

It is to be understood that the fast boxes algorithm-based data location learning process as described above is applied separately to the data associated with each selected sensor. That is, the algorithm is applied to numerous sets of data, once for each sensor. AS a result, it is possible that only a few of the selected sensors actually produce results that sufficiently discriminate its pre-event data from its post-event data.

In imbalanced data learning, conventional metrics such as "accuracy" cannot be used to make this determination, since these conventional metrics are focused on determining the fit to "majority class" (here, the negative class) data. In contrast, the purpose of the machine learning in accordance with the present invention is to recognize attributes of the pre-event (minority class) data, which may be ignored in classical metrics). Thus, one of the alternative measures of how well the pre-event data can be discriminated from the post-event data utilizes the "area under convex hull of the ROC curve", or AUH. To compute the AUH, the classifiers for various values of the weight parameter c are computed, since c is known to control the relative importance of positive and negative classes. Each setting of c corresponds to a single point on the ROC curve, with a count of true and false positives. The AUH formed by the points on the ROC curve is computed, and then normalized by dividing the result by the product of the positive examples with the negative examples. Thus, the best possible result is an AUH of 1.0.

For the purposes of the present invention, an AUH value of at least 0.5 is desired, where the higher the value, the greater the indication that the pattern in the pre-event data can be learned and the differences between the two classes identified. The ability to learn the differences between these two classes of data thus allows for the power plant operator to recognize symptoms of probable gas turbine failure and plan scheduled maintenance accordingly.

## Experimental Test Results

In order to evaluate the ability of the inventive methodology to recognize data patterns and predict gas turbine failure events, a set of data from a known gas turbine was studied. Historical data from the time period of 2009 through 2013 was available for study.

For the purpose of evaluating a "failure" event, the main indicator was presumed to be the MW (megawatt) sensor. Obviously, if this sensor has a reading of "zero" (0), it indicates that the machine is not operating and a failure has occurred. For the purposes of the present invention, a threshold of 20% was selected to be associated with this sensor data, meaning that any MW readings that are less than 20% of nominal value were removed as "outliers".

In terms of artifacts, data within 15 days after an event were also removed (since the re-start of a machine is believed to create unstable sensor readings for an extended period of time). Some overlapping events were also found in the raw data (that is, some events were recorded by more than one sensor). The data was "cleaned" to remove the duplicate information. For the set of data being studied, a list of recognized events available for analysis was identified, as contained in the following table:

**Table I**

| Event ID | Event Type | Event Status | Event Start | Event Stop |
|---|---|---|---|---|
| A | Other | Executed | 22 Apr 09 | 2 May 09 |
| B | Minor | Validated | 30 Jul 09 | 5 Aug 09 |
| C | Minor | Confirmed | 13 Mar 10 | 17 Mar 10 |
| D | Major | Confirmed | 19 Mar 11 | 6 May 11 |
| E | Other | Confirmed | 14 Nov 12 | 28 Nov 12 |
| F | Other | Confirmed | 30 Oct 13 | 31 Dec 13 |

Using the AUROC procedures discussed above in association with step 120 (see FIG. 2), a set of 71 sensors was selected to be used for creating the pre-event data. The following list identifies the 20 sensors (out of the selected 71) with the highest AUROC values:

**Table II**

| Rank | Sensor ID | AUROC value | | Rank | Sensor ID | AUROC value |
|---|---|---|---|---|---|---|
| | | | | | | |
| 1 | a | 0.712536 | | 11 | k | 0.619897 |
| 2 | b | 0.645732 | | 12 | l | 0.618143 |
| 3 | c | 0.637737 | | 13 | m | 0.612938 |
| 4 | d | 0.636884 | | 14 | n | 0.068654 |
| 5 | e | 0.633068 | | 15 | o | 0.608575 |
| 6 | f | 0.625489 | | 16 | p | 0.600587 |
| 7 | 9 | 0.623236 | | 17 | q | 0.605850 |
| 8 | h | 0.622943 | | 18 | r | 0.604829 |
| 9 | i | 0.621252 | | 19 | s | 0.602738 |
| 10 | j | 0.620957 | | 20 | t | 0.602596 |

With this set determined, the data for three days prior to a selected event date was assembled defined as the "minority class", or pre-event, data. The "majority class" data (that is, the sensor readings associated with normal turbine operating conditions) was then defined. As discussed above, the sensor readings from a period of time immediately following a turbine re-start may be unstable, so that data is considered as artifact and not used in the "majority class". For example, the sensor readings for a period of 15 days after the event date may be ignored. The data from days 20-25 after the event data is defined as the "majority class" data.

The fast boxes algorithm was then applied to learn the location of the pre-event data with respect to the post-event data, so that a decision can be made to see if going forward it is possible to discriminate this pre-event data from the normal data and thus predict a potential gas turbine failure event. The fast boxes algorithm begins, as described above in association with step 142 in the flowchart of FIG. 2, by clustering the pre-event data (using a processor such as element 18 shown in FIG.1), creating a set of K clusters of this minority class data.

The number of clusters (K) to be used in the fast boxes algorithm was chosen in this particular case to range between the values of 1 and 4. The expansion parameter $\beta$ was also chosen to be in this same value range, and the weight c for negative data was selected to range between 0.1 and 1.0. The algorithm was applied to the data using ten different parameter sets (K,β,c), and the steps as outlined in steps 144 and 146 were performed to generate results for both a "3-day before-event" study and a "5-day before-event" study. For the purposes of the present invention, the results analysis performed using the AUH measure was then performed to see if there were any event indicators present in the minority class data, that is, whether or not any of the pre-event data could be discriminated from the normal operating data. Additionally, in order to study the accuracy of the inventive process, the two events identified as "a" and "f" were randomly selected as the test data, and the four remaining events listed in Table I were used as the training data.

The AUH values for each of the ten sets of initial conditions is shown below:

**Three-day pre-event results:**

| TRAINING | TEST |
|---|---|
| 0.9477 | 0.9189 |
| 0.9477 | 0.8905 |
| 0.8537 | 1.0000 |
| 0.9477 | 0.9189 |
| 0.9477 | 0.9155 |
| 0.9477 | 0.9192 |
| 0.9477 | 0.9165 |
| 0.9477 | 0.8872 |
| 0.9477 | 0.9188 |
| 0.9477 | 0.9155 |
| Training mean: 0.9389 (standard deviation 0.0297)<br>Testing mean: 0.9201 (standard deviation 0.0306) | |

**Five day pre-event results:**

| TRAINING | TEST |
|---|---|
| 0.8908 | 0.6522 |
| 0.8986 | 0.6964 |
| 0.8907 | 0.6522 |
| 0.8986 | 0.6964 |
| 0.8986 | 0.6964 |
| 0.8986 | 0.6964 |
| 0.8985 | 0.6964 |
| 0.8985 | 0.6964 |
| 0.8986 | 0.6964 |
| 0.8194 | 0.8037 |
| Training mean: 0.8861 (standard deviation 0.0247)<br>Testing mean: 0.6981 (standard deviation of 0.0414) | |

These results, in terms of generating an AUH value greater than 0.5 thus show that the steps of annotating data and using a fast boxes algorithm to analyze the data allows for a machine learning methodology to be utilized to predict, with confidence, those "symptoms" of gas turbine faults that may lead to an ultimate failure of the machine. Inasmuch as the methodology of the present invention is applied to each separate gas turbine on an individual basis, using that machine's own history of sensor readings, the inventive methodology advantageously learns the most appropriate pre-event data that affects the performance of that machine. Referring back again to the system diagram of FIG.

1, any specific pre-event data pattern that is considered as a viable symptom of imminent failure is stored in symptom signature database 20, for use by the power plant personnel in their monitoring of that machine.

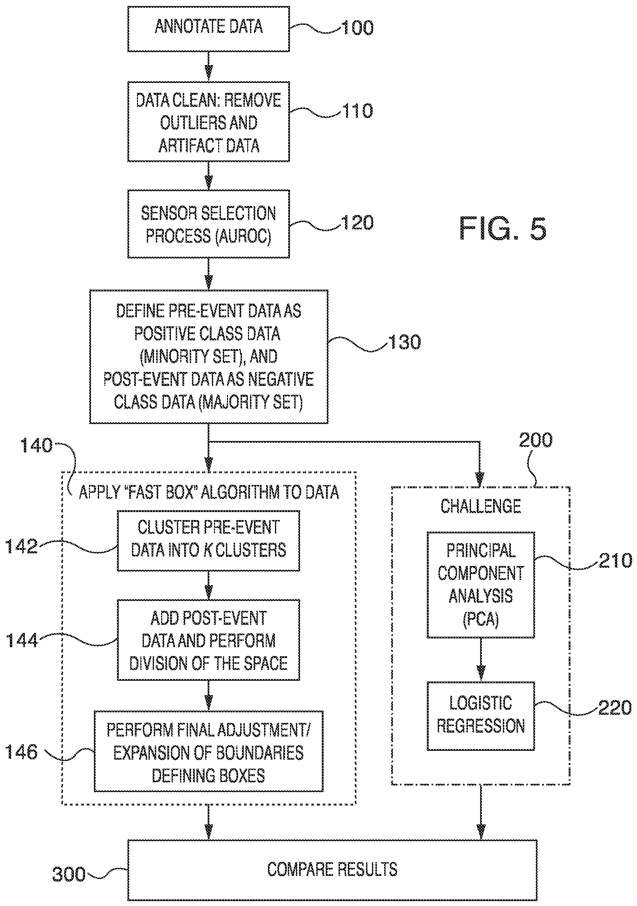

For the purposes of validating these fast boxes prediction results, a traditional method for classification of the data may be formed as a "challenger". This is shown in the flowchart of FIG. 5, where a challenger process 200 is used in parallel with the fast boxes algorithm to review and compare the pre-event and post-event data. In this case, the before-event data and after-event data are pulled from the clean set for analysis. In particular, a principal component analysis (PCA) is performed in step 210 and used to extract features from the raw sensor data. In the exemplary process, the first nine (9) principal components were selected for use in the following logistic regression process (step 220). A goodness-of-fit test and individual coefficients were used in the compare results process of step 300 to evaluate the challenger model against the fast boxes results.

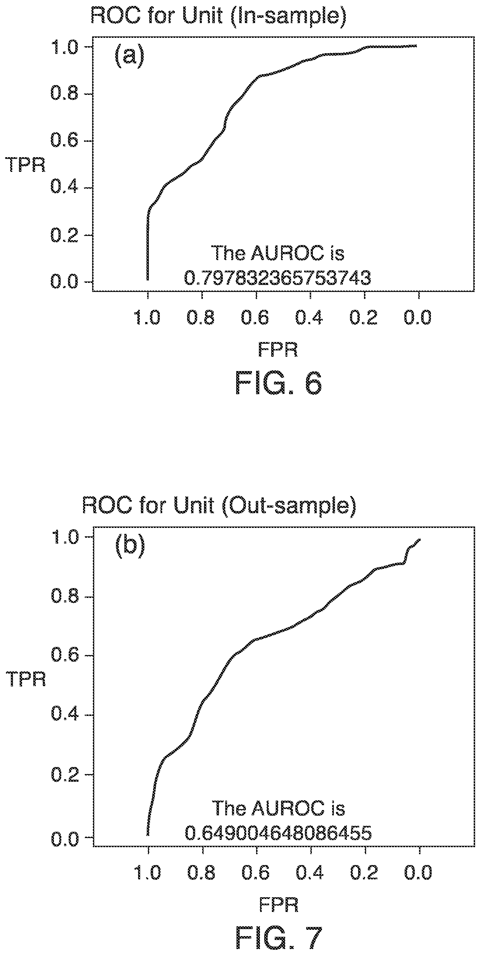

In comparing the two approaches, the results from logistic regression show that this prior art technique is no better than the fast boxes approach. Indeed, the logistic regression is worse than fast boxes in discriminating pre-event in-testing data. The charts shown in FIGs. 6(a) and (b) show the ROC curves associated with the challenger approach, for the set of training events and testing events, respectively. As shown, the training events used in the creation of FIG. 6(a) exhibit an AUROC value of about 0.79783. The AUROC value for the testing data is shown to be about 0.64900. In comparison, the AUROC values obtained using the fast boxes approach were in the range of 0.8861 to 0.9389 for the training data, and in the range of 0.6981 to 0.9201. Clearly, the fast boxes approach of the present invention yields a better predictor result.

The above-described method may be implemented by program modules that are executed by a computer, as described above. Generally, program modules include routines, objects, components, data structures and the like that perform particular tasks or implement particular abstract data types. The term "program" as used herein may connote a single program module or multiple program modules acting in concert. The disclosure may be implemented on a variety of types of computers, including personal computers (PCs), hand-held devices, multi-processor systems, microprocessor-based programmable consumer electronics, network PCs, minicomputers, mainframe computers and the like. The disclosure may also be employed in distributed computing environments, where tasks are performed by remote processing devices that are linked through a communications network. In a distributed computing environment, modules may be located in both local and remote memory storage devices.

An exemplary processing module for implementing the methodology above may be hardwired or stored in a separate memory that is read into a main memory of a processor or a plurality of processors from a computer readable medium such as a ROM or other type of hard magnetic drive, optical storage, tape or flash memory. In the case of a program stored in a memory media, execution of sequences of instructions in the module causes the processor to perform the process steps described herein. The embodiments of the present disclosure are not limited to any specific combination of hardware and software and the computer program code required to implement the foregoing can be developed by a person of ordinary skill in the art.

The term "computer-readable medium" as employed herein refers to any tangible machine-encoded medium that provides or participates in providing instructions to one or more processors. For example, a computer-readable medium may be one or more optical or magnetic memory disks, flash drives and cards, a read-only memory or a random access memory such as a DRAM, which typically constitutes the main memory. Such media excludes propagated signals, which are not tangible. Cached information is considered to be stored on a computer-readable medium. Common expedients of computer-readable media are well-known in the art and need not be described in detail here.

**APPENDIX: BOUNDARY EXPANSION IN FAST BOXES ALGORITHM**

**Input:** Number of boxes (clusters) K, tradeoffs c and $\beta$, and Dataset $\{x_i, y_i\}_i$

**Output:** Boundaries of boxes (defining limits of pre-event data), $l_{f,j,k}$ and $u_{f,j,k}$, where "l" denotes *lower* boundary and "u" denotes *upper* boundary, the subscript "f" denotes *final* boundary, the subscript "j" denotes the $j^{th}$ dimension, and the subscript "k" denotes the $k^{th}$ box

    1. Normalize sensor reading data to be between -1 and +1.

    2. Cluster the minority (pre-event) data into K clusters.

    3. Construct the minimal enclosing box for each cluster by computing starting boundaries $l_{s,j,k}$ and $u_{s,j,k}$ (the subscript "s" denoting the *starting* boundary).

    4. Construct data for local classifiers $X_{l,j,k}$ and $X_{u,j,k}$ based on the following:

$$X_{l,j,k} := \left\{ x : x_j \leq l_{s,j,k} \right\} \cup \left\{ x : l_{s,j,k} \leq x_j \leq \frac{l_{s,j,k} + u_{s,j,k}}{2}, l_{s,p,k} \leq x_p \leq u_{s,p,k}, p \neq j \right\}$$

$$X_{u,j,k} := \{x : x_j \geq u_{s,j,k}\} \cup \left\{x : \frac{l_{s,j,k} + u_{s,j,k}}{2} \leq x_j \leq u_{s,j,k}, l_{s,p,k} \leq x_p \leq u_{s,p,k}, \ p \neq j\right\},$$

where $p$ denotes additional dimensions (other than $j$)

5. Compute the "regularized" exponential losses for the classifiers of step 4, denoted as $R_+^{l,j,k}$, $R_-^{l,j,k}$, $R_+^{u,j,k}$, $R_-^{u,j,k}$ and defined as follows:

$$R_+^{l,j,k} := \sum_{x \in S_+^k \cap X_{l,j,k}} exp\left[-(x_j - l_{s,j,k} + 1)\right]$$

$$R_-^{l,j,k} := \sum_{x \in S_-^k \cap X_{l,j,k}} exp\left[x_j - l_{s,j,k} + 1 + \sum_{p \neq j}\left(\lfloor x_p - u_{s,p,k}\rfloor_+ + \lfloor l_{s,p,k} - x_p\rfloor_+\right)\right]$$

$$R_+^{u,j,k} := \sum_{x \in S_+^k \cap X_{u,j,k}} exp\left[-(u_{s,j,k} - x_j + 1)\right]$$

$$R_-^{u,j,k} := \sum_{x \in S_-^k \cap X_{u,j,k}} exp\left[u_{s,j,k} - x_j + 1 + \sum_{p \neq j}\left(\lfloor x_p - u_{s,p,k}\rfloor_+ + \lfloor l_{s,p,k} - x_p\rfloor_+\right)\right],$$

where the subscript "+" denotes pre-event data points within the cluster, and the subscript "-" denotes all data points outside of the cluster, $S_+^k$ is the set of pre-event data points within the $k^{th}$ cluster, and $S_-^k$ is the set of all data points outside of the $k^{th}$ cluster

6. Compute $l_{r,j,k}$ and $u_{r,j,k}$ based on the following:

$$l_{r,j,k} = l_{s,j,k} - 1 + log\left(\frac{-\beta + \sqrt{\beta^2 + 4cR_+^{l,j,k}R_-^{l,j,k}}}{2R_+^{l,j,k}}\right)$$

$$u_{r,j,k} = ul_{s,j,k} + 1 + log\left(\frac{\beta + \sqrt{\beta^2 + 4cR_+^{u,j,k}R_-^{u,j,k}}}{2R_+^{u,j,k}}\right)$$

7. Perform boundary expansion based on:

$$l_{f,j,k} := \sup \ \{x_j | x \in S_-, x_j < min(l_{r,j,k}, l_{s,j,k})\} + \epsilon, \qquad \forall j, k$$

$$u_{f,j,k} := \inf \ \{x_j | x \in S_-, x_j > max(u_{r,j,k}, u_{s,j,k})\} - \epsilon, \qquad \forall j, k$$

where the subscript "f" denotes the final boundary, and $\epsilon$ is a small number.

8. Un-normalize by rescaling sensor reading data back into meaningful value range.

**Claims**

1. A method for predicting failure events of a gas turbine in a power plant (1), comprising:

   obtaining (100) a set of historical time series data associated with a recognized failure event of a gas turbine (5) being studied, the historical data comprising a set of sensor readings collected for a time period prior to the recognized event, defined as a pre-event time period;
   selecting (120) a subset of sensors (7) to be analyzed and defining pre-event data as the sensor readings from the selected subset of sensors (7) collected during the pre-event time period;
   comparing (130) the pre-event data to normal operation data;
   ascertaining a level of discrimination between the pre-event data and the normal operation data, and if the level of discrimination is above a given threshold;
   identifying the pre-event data as a symptom pattern for use in predicting a future failure of the gas turbine (5) being studied;
   **characterized in that**
   the step of selecting (120) a subset of sensors (7) includes the steps of:

      for each sensor (7), calculating an area-under-receiver-operating-curve AUROC value comparing the pre-event data to the normal operation data;
      defining a threshold AUROC value suitable for predicting failures of the gas turbine (5) being studied; and
      selecting each sensor (7) having an AUROC value greater than the defined threshold.

2. The method of claim 1 wherein the step of obtaining (100) a set of historical data includes annotating historical sensor reading data and searching the annotated data to locate the recognized failure event along a time line of the set of historical data.

3. The method of claim 1 wherein the step of obtaining (100) a set of historical data further includes cleaning (110) the set of historical data to remove outliers and artifacts from the set of sensor readings.

4. The method of claim 1 wherein the step of comparing (130) the pre-event data to the normal operation data includes the steps of:

   for each selected sensor (7), utilizing (140) a fast boxes algorithm to learn the location of the pre-event data with respect to a normal event, clustering the pre-event data into a predetermined number of rectangular boxes; and
   defining a set of edges of the rectangular boxes as a set of boundaries separating the pre-event data from the normal operation data.

5. The method of claim 4 wherein the fast boxes algorithm used (140) in the comparing step includes the steps of:

   clustering (142) the pre-event data into a set of K boxes in a state space, each box defined by a rectangle with edges formed as parallel pairs of axes; introducing (144) the normal event data into the state space and assigning a predetermined weight c to all normal event data points closest to the edges of the boxes; and
   expanding (146) the boundaries of each box by a factor of $\beta$, applying a negative weight of c to obtain an optimum expansion to create a final set of box edges defining boundaries between clusters of pre-event data and normal operation data.

6. The method of claim 5, wherein K is selected from the range of 1 to 4, $\beta$ is selected from the range of 1 to 4, and c is selected from the range of 0.1 to 1.0.

7. The method of claim 5, wherein the step of ascertaining a level of discrimination includes:

   defining a threshold level of discrimination; and
   applying (150) a metric to the state space to determine if the final set of box edges boundaries exceeds the threshold level of discrimination.

8. The method of claim 7 wherein the applied metric is the "area under hull convex ROC" AUH.

9. The method of claim 8 wherein an AUH threshold of least 0.5 is used as the threshold level of discrimination.

10. A system (10) for predicting failure events of a gas turbine (5) comprising
a database (12) of historical sensor readings;
a performance predictor component (14) in communication with the database (12) of historical sensor readings, the performance predictor component (14) include a program storage device (16) and a processor (18), the program storage device (16) embodying in a fixed tangible medium a set of program instructions executable by the processor (18) to perform the method steps of:

retrieving (100) a set of historical time series data associated with a recognized failure event of a gas turbine (5) being studied, the historical data comprising a set of sensor readings stored in the database (12) of historical sensor readings data, and collected for a time period prior to the recognized failure event defined as a pre-event time period;
selecting (12) a subset of sensors (7) to be analyzed and defining pre-event data as the sensor readings from the selected subset of sensors (7) collected during the pre-event time period;
comparing (130) the pre-event data to normal operation data;
ascertaining a level of discrimination between the pre-event data and the normal operation data, and if the level of discrimination is above a given threshold;
identifying the pre-event data as a symptom pattern for use in predicting a future failure of the gas turbine (5) being studied; and
a database (20) for storing the symptom pattern identified by the performance predictor component (14);
**characterized in that**
the step of selecting (120) a subset of sensors (7) includes the steps of:

for each sensor (7), calculating an area-under-receiver-operating-curve AUROC value comparing the pre-event data to the normal operation data;
defining a threshold AUROC value suitable for predicting failures of the gas turbine (5) being studied; and
selecting each sensor (7) having an AUROC value greater than the defined threshold..

**Patentansprüche**

1. Verfahren zum Vorhersagen von Fehlerereignissen einer Gasturbine in einem Kraftwerk (1), das Folgendes umfasst:

Erhalten (100) eines Satzes historischer Zeitreihendaten, die einem erkannten Fehlerereignis einer untersuchten Gasturbine (5) zugeordnet sind, wobei die historischen Daten einen Satz Sensormesswerte umfassen, die für einen Zeitraum vor dem erkannten Ereignis, der als ein Vorereigniszeitraum definiert ist, gesammelt wurden;
Wählen (120) einer Untermenge Sensoren (7), die analysiert werden sollen, und Definieren von Vorereignisdaten als die Sensormesswerte von der gewählten Untermenge Sensoren (7), die während des Vorereigniszeitraums gesammelt wurden;
Vergleichen (130) der Vorereignisdaten mit Normalbetriebsdaten;
Ermitteln eines Diskriminierungsgrades zwischen den Vorereignisdaten und den Normalbetriebsdaten und dann, wenn der Unterscheidungsgrad über einem gegebenen Schwellenwert liegt;
Identifizieren der Vorereignisdaten als ein Symptommuster zur Verwendung beim Vorhersagen eines zukünftigen Fehlers der untersuchten Gasturbine (5);
**dadurch gekennzeichnet, dass**
der Schritt des Wählens (120) einer Untermenge von Sensoren (7) die folgenden Schritte enthält:

für jeden Sensor (7) Berechnen eines Wertes einer Fläche unter einer Empfängerbetriebskurve, AUROC-Wert, der die Vorereignisdaten mit den Normalbetriebsdaten vergleicht;
Definieren eines Schwellen-AUROC-Wertes, der geeignet ist, Fehler der untersuchten Gasturbine (5) vorherzusagen; und
Wählen jedes Sensors (7), der einen AUROC-Wert besitzt, der größer als der definierte Schwellenwert ist.

2. Verfahren nach Anspruch 1, wobei der Schritt des Erhaltens (100) eines Satzes historischer Daten ein Kommentieren historischer Sensorlesedaten und ein Durchsuchen der kommentierten Daten, um das erkannte Fehlerereignis entlang einer Zeitleiste des Satzes historischer Daten zu lokalisieren, umfasst.

**3.** Verfahren nach Anspruch 1, wobei der Schritt des Erhaltens (100) eines Satzes historischer Daten ferner ein Bereinigen (110) des Satzes historischer Daten enthält, um Ausreißer und Störsignale aus dem Satz von Sensormesswerten zu entfernen.

**4.** Verfahren nach Anspruch 1, wobei der Schritt des Vergleichens (130) der Vorereignisdaten mit den normalen Betriebsdaten die folgenden Schritte umfasst:

für jeden gewählten Sensor (7) Verwenden (140) eines schnellen Felderalgorithmus, um den Ort der Vorereignisdaten in Bezug auf ein normales Ereignis zu lernen, der die Vorereignisdaten in eine vorgegebene Anzahl rechteckiger Felder gruppiert; und
Definieren eines Satzes Kanten der rechteckigen Felder als einen Satz Grenzen, die die Vorereignisdaten von den Normalbetriebsdaten trennen.

**5.** Verfahren nach Anspruch 4, wobei der schnelle Felderalgorithmus (140), der im Vergleichsschritt verwendet wird, die folgenden Schritte umfasst:

Gruppieren (142) der Vorereignisdaten in einen Satz von K Feldern in einem Zustandsraum, wobei jedes Feld durch ein Rechteck mit Kanten, die als parallel Paare von Achsen gebildet sind, definiert ist; Einbringen (144) der Normalzustandsdaten in den Zustandsraum und Zuweisen eines vorgegebenen Gewichts c zu allen normalen Ereignisdatenpunkten, die am nächsten an den Kanten der Felder liegen; und
Erweitern (146) der Grenzen jedes Feldes um einen Faktor $\beta$, Anwenden eines negativen Gewichts von c, um eine optimale Erweiterung zu erhalten, um einen endgültigen Satz von Feldkanten, die Grenzen zwischen Clustern von Vorereignisdaten und Normalbetriebsdaten definieren, zu erstellen.

**6.** Verfahren nach Anspruch 5, wobei K aus dem Bereich von 1 bis 4 gewählt ist, $\beta$ aus dem Bereich von 1 bis 4 gewählt ist und c aus dem Bereich von 0,1 bis 1,0 gewählt ist.

**7.** Verfahren nach Anspruch 5, wobei der Schritt des Ermittelns eines Diskriminierungsgrades Folgendes umfasst:

Definieren eines Schwellendiskrimierungsgrades; und
Anwenden (150) einer Metrik auf den Zustandsraum, um zu bestimmen, ob der endgültige Satz Feldkantengrenzen den Schwellendiskrimierungsgrad überschreitet.

**8.** Verfahren nach Anspruch 7, wobei die verwendete Metrik die "Fläche unter einer konvexen Hüll-ROC", AUH, ist.

**9.** Verfahren nach Anspruch 8, wobei ein AUH-Schwellenwert von mindestens 0,5 als der Schwellendiskrimierungsgrad verwendet wird.

**10.** System (10) zum Vorhersagen von Fehlerereignissen einer Gasturbine (5), die Folgendes umfasst:

eine Datenbank (12) historischer Sensormesswerte;
eine Leistungsfähigkeitsprädiktorkomponente (14) in Kommunikation mit der Datenbank (12) historischer Sensormesswerte, wobei die Leistungsfähigkeitsprädiktorkomponente (14) eine Programmspeichereinrichtung (16) und einen Prozessor (18) enthält und die Programmspeichereinrichtung (16) in einem festen materiellen Medium einen Satz Programmanweisungen verkörpert, die durch den Prozessor (18) ausführbar sind, um die folgenden Verfahrensschritte durchzuführen:

Erhalten (100) eines Satzes historischer Zeitreihendaten, die einem erkannten Fehlerereignis einer untersuchten Gasturbine (5) zugeordnet sind, wobei die historischen Daten einen Satz Sensormesswerte umfassen, die in der Datenbank (12) historischer Sensormesswertdaten gespeichert sind und für einen Zeitraum vor dem erkannten Fehlerereignis, der als ein Vorereigniszeitraum definiert ist, gesammelt wurden;
Wählen (12) einer Untermenge Sensoren (7), die analysiert werden sollen, und Definieren von Vorereignisdaten als die Sensormesswerte von der gewählten Untermenge Sensoren (7), die während des Vorereigniszeitraums gesammelt wurden;
Vergleichen (130) der Vorereignisdaten mit Normalbetriebsdaten;
Ermitteln eines Diskriminierungsgrades zwischen den Vorereignisdaten und den Normalbetriebsdaten und dann, wenn der Unterscheidungsgrad über einem gegebenen Schwellenwert liegt;
Identifizieren der Vorereignisdaten als ein Symptommuster zur Verwendung beim Vorhersagen eines zukünftigen Fehlers der untersuchten Gasturbine (5); und

eine Datenbank (20) zum Speichern des Symptommusters wird durch die Leistungsfähigkeitsprädiktorkomponente (14) identifiziert;

**dadurch gekennzeichnet, dass**

der Schritt des Wählens (120) einer Untermenge von Sensoren (7) die folgenden Schritte enthält:

für jeden Sensor (7) Berechnen eines Wertes einer Fläche unter einer Empfängerbetriebskurve, AUROC-Wert, der die Vorereignisdaten mit den Normalbetriebsdaten vergleicht;

Definieren eines Schwellen-AUROC-Wertes, der geeignet ist, Fehler der untersuchten Gasturbine (5) vorherzusagen; und

Wählen jedes Sensors (7), der einen AUROC-Wert besitzt, der größer als der definierte Schwellenwert ist.

## Revendications

1. Procédé de prédiction d'événements de panne d'une turbine à gaz dans une centrale électrique (1), consistant à :

obtenir (100) un ensemble de données de séries chronologiques historiques associées à un événement de panne reconnu d'une turbine à gaz (5) en cours d'étude, les données historiques comprenant un ensemble de lectures de capteur collectées pendant une période de temps antérieure à l'événement reconnu, définie en tant que période de temps pré-événement ;

sélectionner (120) un sous-ensemble de capteurs (7) à analyser et définir dans le sous-ensemble sélectionné de capteurs (7) des données de pré-événement en tant que lectures de capteur collectées pendant la période de pré-événement ;

comparer (130) les données de pré-événement à des données de fonctionnement normal ;

vérifier un niveau de discrimination entre les données de pré-événement et les données de fonctionnement normal et si le niveau de discrimination est supérieur à un seuil donné ;

identifier les données de pré-événement en tant que modèle de symptôme destiné à être utilisé dans la prédiction d'une panne future de la turbine à gaz (5) en cours d'étude ;

**caractérisé en ce que** :

l'étape de sélection (120) d'un sous-ensemble de capteurs (7) comprend les étapes consistant à :

pour chaque capteur (7), calculer une valeur de la zone sous la courbe de caractéristique de fonctionnement du récepteur (AUROC) comparant les données pré-événement aux données de fonctionnement normal ;

définir une valeur-seuil AUROC adaptée à la prédiction de pannes de la turbine à gaz (5) en cours d'étude ; et

sélectionner chaque capteur (7) ayant une valeur AUROC supérieure au seuil défini.

2. Procédé selon la revendication 1, dans lequel l'étape d'obtention (100) d'un ensemble de données historiques consiste à annoter des données de lectures de capteur historiques et à rechercher dans les données annotées pour localiser l'événement de panne reconnu suivant une ligne de temps de l'ensemble de données historiques.

3. Procédé selon la revendication 1, dans lequel l'étape d'obtention (100) d'un ensemble de données historiques consiste à nettoyer (110) l'ensemble de données historiques pour supprimer des valeurs aberrantes et des artéfacts de l'ensemble de lectures de capteur.

4. Procédé selon la revendication 1, dans lequel l'étape de comparaison (130) des données pré-événement aux données de fonctionnement normal comprend les étapes consistant à :

pour chaque capteur sélectionné (7), utiliser (140) un algorithme à boîtes rapides pour apprendre l'emplacement des données de pré-événement par rapport à un événement normal, et regrouper les données de pré-événement en un nombre prédéterminé de boîtes rectangulaires ; et

définir un ensemble de bords des boîtes rectangulaires en tant qu'ensemble de limites séparant les données de pré-événement des données de fonctionnement normal.

5. Procédé selon la revendication 4, dans lequel l'utilisation (140) de l'algorithme à boîtes rapides dans l'étape de comparaison comprend les étapes consistant à :

regrouper (142) les données pré-événement en un ensemble de K boîtes dans un espace d'états, chaque boîte étant définie par un rectangle avec des bords formés par des paires d'axes parallèles ;

introduire (144) les données d'événement normales dans l'espace d'états et attribuer une pondération prédéterminée c à tous les points de données d'événement normales les plus proches des bords des boîtes ; et

étendre (146) les limites de chaque boîte d'un facteur β, et appliquer une pondération négative c pour obtenir une extension optimale pour créer un ensemble final de bords de boîte définissant des limites entre des groupes de données pré-événement et des données de fonctionnement normal.

**6.** Procédé selon la revendication 5, dans lequel K est sélectionné dans l'intervalle de 1 à 4, β est sélectionné dans l'intervalle de 1 à 4, et c est sélectionné dans l'intervalle de 0,1 à 1,0.

**7.** Procédé selon la revendication 5, dans lequel l'étape de vérification d'un niveau de discrimination consiste à :

définir un niveau-seuil de discrimination ; et

appliquer (150) un indicateur métrique à l'espace d'états pour déterminer si l'ensemble final de limites de bords de boîte dépasse le niveau-seuil de discrimination.

**8.** Procédé selon la revendication 7, dans lequel l'indicateur métrique appliqué est la « zone sous la coque convexe de la ROC » (AUH).

**9.** Procédé selon la revendication 8, dans lequel un seuil AUH d'au moins 0,5 est utilisé en tant que niveau-seuil de discrimination.

**10.** Système (10) de prédiction d'événements de panne d'une turbine à gaz (5), comprenant :

une base de données (12) de lectures de capteur historiques ;

un composant prédicteur de performances (14) en communication avec la base de données (12) de lectures de capteur historiques, le composant prédicteur de performances (14) comprenant un dispositif de stockage de programme (16) et un processeur (18), le dispositif de stockage de programme (16) intégrant sur un support tangible fixe un ensemble d'instructions de programme exécutables par le processeur (18) pour réaliser les étapes de procédé consistant à :

récupérer (100) un ensemble de données de séries chronologiques historiques associées à un événement de panne reconnu d'une turbine à gaz (5) en cours d'étude, les données historiques comprenant un ensemble de lectures de capteur stockées dans la base de données (12) de données de lectures de capteur historiques et collectées pendant une période de temps antérieure à l'événement de panne reconnu, définie en tant que période de temps pré-événement ;

sélectionner (12) un sous-ensemble de capteurs (7) à analyser et définir dans le sous-ensemble sélectionné de capteurs (7) des données de pré-événement en tant que lectures de capteur collectées pendant la période de pré-événement ;

comparer (130) les données de pré-événement à des données de fonctionnement normal ;

vérifier un niveau de discrimination entre les données de pré-événement et les données de fonctionnement normal et si le niveau de discrimination est supérieur à un seuil donné ;

identifier les données de pré-événement en tant que modèle de symptôme destiné à être utilisé dans la prédiction d'une panne future de la turbine à gaz (5) en cours d'étude ; et

une base de données (20) pour stocker le modèle de symptôme identifié par le composant prédicteur de performances (14) ;

**caractérisé en ce que** :

l'étape de sélection (120) d'un sous-ensemble de capteurs (7) comprend les étapes consistant à :

pour chaque capteur (7), calculer une valeur de la zone sous la courbe de caractéristique de fonctionnement du récepteur (AUROC) comparant les données pré-événement aux données de fonctionnement normal ;

définir une valeur-seuil AUROC adaptée à la prédiction de pannes de la turbine à gaz (5) en cours d'étude ; et

sélectionner chaque capteur (7) ayant une valeur AUROC supérieure au seuil défini.

FIG. 1

SENSOR READINGS

PERFORMANCE PREDICTOR 14

18

MEM 16

μP
• annotate
• data analysis
  learning pre-event
• evaluation

12

20

CONTROL 8

FUEL

1

5

7

6

7.2

2

4

7.1

5.1

5.2

7.3

5.3

5.4

PLANT LOAD

3

EP 3 191 905 B1

**FIG. 2**

ANNOTATE DATA — 100

DATA CLEAN: REMOVE OUTLIERS AND ARTIFACT DATA — 110

SENSOR SELECTION PROCESS (AUROC) — 120

DEFINE PRE-EVENT DATA AS POSITIVE CLASS DATA (MINORITY SET), AND POST-EVENT DATA AS NEGATIVE CLASS DATA (MAJORITY SET) — 130

140 — APPLY "FAST BOX" ALGORITHM TO DATA

CLUSTER PRE-EVENT DATA INTO K CLUSTERS — 142

ADD POST-EVENT DATA AND PERFORM DIVISION OF THE SPACE — 144

PERFORM FINAL ADJUSTMENT/ EXPANSION OF BOUNDARIES DEFINING BOXES — 146

150 — APPLY PERFORMANCE METRIC TO RESULTS

ACCEPTABLE ? — 160

RETAIN BOUNDARY INFORMATION TO USE IN MONITORING SENSOR DATA GOING FORWARD — 170

UNABLE TO DISCRIMINATE PRE-EVENT DATA FROM POST-EVENT DATA — 180

FIG. 3

FIG. 4

FIG. 5

## ROC for Unit (In-sample)

(a)

The AUROC is
0.797832365753743

TPR

FPR

## FIG. 6

## ROC for Unit (Out-sample)

(b)

The AUROC is
0.649004648086455

TPR

FPR

## FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012316835 A1

- US 2005267702 A1

**Non-patent literature cited in the description**

- **S. GOH et al.** Boxed Drawings with Learning for Imbalanced Data. *the Proceedings of the 20th ACM SIGKDD Conference on Knowledge Discovery and Data Mining (KDD),* 2014